# EUROPEAN PATENT APPLICATION

(11) **EP 3 045 261 A1**
(43) Date of publication of application: **20.07.2016**
(21) Application number: 15176508.8
(22) Date of filing: 13.07.2015
(51) Int. Cl.: B23P 15/32, B23B 51/00

(54) **METHOD FOR PRODUCING A DRILL BIT**

(30) Priority: 19.01.2015 TW 104101694
(71) Applicant: Compass Corporation, Tainan City (TW)
(72) Inventor: Wang, Tzu-Chien, Tainan City (TW); Wang, Jui-Hsiao, 708 Tainan City (TW)
(74) Representative: Lang, Christian

(57) **Abstract**

A method for producing a drill bit includes preparing a metal shank and a metal drill, with the metal drill having a hardness greater than a hardness of the metal shank. Each of the metal shank and a metal drill includes an end having an end face. The metal shank and the metal drill are connected end to end, with the end face of the metal shank coaxially abutting the end face of the metal drill. The ends of the metal shank and the metal drill connected end to end are welded to form a molten pool at the welding area. A surface treatment is conducted on the welding area after welding. The welding area is annealed after the surface treatment.

## Description

### BACKGROUND OF THE INVENTION

The present invention relates to a method for producing a drill bit and, more particularly, to a method for producing a drill bit while saving costs, increasing the strength of the drill bit, and prolonging the service life of the drill bit.

A conventional drill bit includes a bit at a front portion thereof and a shank at a rear portion thereof behind the bit. The shank can be connected to an external tool. The bit and the shank are generally integrally formed with stainless steel having a hardness of about HRC30. However the low-hardness stainless steel causes a high wear rate at the bit, requiring frequent replacement of the bit and requiring time for replacement. Furthermore, the drilling precision and quality are adversely affected by the bit when wear occurs.

To mitigate the above disadvantages, drill bits integrally formed of tungsten-carbon steel having a hardness of about HRC70 have been produced. The drilling operation of the high-hardness drill bits have a lower wear rate at the bits while providing high drilling precision and quality. However, the costs of the high-hardness drill bits are much higher than the low-hardness drill bits, failing to meet the economic effect.

To overcome the disadvantages of the above two types of drill bits, a drill bit including a front portion formed by a bit made of a high-hardness metal and a rear portion formed by a shank made of a low-hardness metal is proposed. The bit and the shank are welded together. The low-cost shank can reduce the overall costs of the drill bit. However, after welding of the two different metals, a shrinking inner stress is generated at the welding area during cooling from the molten high-temperature state, leading to non-uniform strength at the welding area, such that the welding area is apt to break during drilling operation of the drill bit.

### BRIEF SUMMARY OF THE INVENTION

An objective of the present invention is to provide a method for producing a drill bit while saving costs, increasing the strength of the drill bit, and prolonging the service life of the drill bit.

A method for producing a drill bit according to the present invention includes:
(a1) preparing a metal shank and a metal drill, with the metal shank having a hardness greater than a hardness of the metal drill, with each of the metal shank and a metal drill including an end having an end face, with the metal shank and the metal drill connected end to end, and with the end face of the metal shank coaxially abutting the end face of the metal drill;
(a2) welding the ends of the metal shank and the metal drill connected end to end, forming a molten pool at the welding area;
(a3) conducting a surface treatment on the welding area after welding; and
(a4) annealing the welding area after the surface treatment.

In an example, the welding in step (a2) can include coaxial welding around a peripheral contact area between the end faces of the metal bit and the metal shank. The coaxial welding can include flash welding and laser welding and can be operated at a power in range of 5-30 kw to form the molten pool having a depth of 0.1-10 mm, achieving binding of the metal shank and the metal bit.

In another example, the welding in step (a2) can include friction welding and resistance welding and can be operated at a power in a range of 5-50 kw to form the molten pool having a depth of 10-50 mm, achieving binding of the metal shank and the metal bit.

A protrusion of oxide is formed on a peripheral contact area between the end faces of the metal bit and the metal shank after the welding in step (a2). Conducting the surface treatment in step (a3) includes removing the protrusion of oxide by mechanical milling or surface polishing grinding.

The annealing in step (a4) can include heating the welding area at a temperature of 400-800°C for 1-20 seconds. In an example, the annealing includes heating a portion of the welding area by supersonic waves.

The metal shank in step (a1) can be made of an alloy of chromium, vanadium, molybdenum, cobalt, manganese, carbon, tungsten, titanium, niobium, nickel, and carbide, or made of high speed steel, stainless steel or alloy suitable for any machine tool or any connecting rod. The metal bit can be made of an alloy of stainless steel, chromium, vanadium, molybdenum, cobalt, manganese, carbon, tungsten, titanium, niobium, nickel, and carbide, or made of an alloy containing tungsten carbide, or made of an alloy containing titanium, niobium, nickel, and molybdenum. The metal shank can have a hardness of about HRC30. The metal bit can have a hardness of about HRC70.

In an example, the end face of the metal shank includes a projection, the end face of the metal bit includes a recess, and the projection is received in the recess. In another example, the end face of the metal shank includes a clockwise helical pattern, the end face of the metal bit includes a counterclockwise helical pattern, and the clockwise helical pattern is complementary to and engages with the counterclockwise helical pattern. In a further example, the end face of the metal shank includes a convex portion, the end face of the metal bit includes a concave portion, and the convex portion is received in the concave portion. A better coaxial precision can be obtained between the metal shank and the metal bit after connection.

The annealing procedure can release the inner stress resulting from heating the metals to the melting point during the welding procedure and then cooling and shrinking the metals, avoiding defects in the metals. The product according to the present invention after annealing has a hardness of HRC30-HRC70 from the metal shank to the metal bit.

The method according to the present invention combines a high-hardness metal bit 2 with a low-hardness metal shank 1 to reduce the costs to increase the drilling efficiency and to prolong the service life of the high-hardness metal bit 2. After welding, annealing is conducted on the welding area to eliminate the shrinking inner stress resulting from direct cooling after high-heat welding. Furthermore, breakage at the welding portion resulting from improper shrinking stress during drilling operation can be avoided to assure use safety.

The present invention will become clearer in light of the following detailed description of illustrative embodiments of this invention described in connection with the drawings.

### DESCRIPTION OF THE DRAWINGS

FIG. 1 is a flowchart illustrating a method for producing a drill bit according to the present invention.
FIG. 2 is an exploded, perspective view of a metal shank and a metal bit for producing a drill bit of a first example according to the present invention.
FIG. 3 is an exploded, cross sectional view of a metal shank and a metal bit for producing a drill bit of a second example according to the present invention.
FIG. 4 is an exploded, cross sectional view of a metal shank and a metal bit for producing a drill bit of a third example according to the present invention.
FIG. 5 is an exploded, cross sectional view of a metal shank and a metal bit for producing a drill bit of a fourth example according to the present invention.
FIG. 5A is a right side view of the metal shank of FIG. 5.
FIG. 5B is a left side view of the metal bit of FIG. 5.
FIG. 6 is an exploded, cross sectional view of a metal shank and a metal bit for producing a drill bit of a fifth example according to the present invention.
FIG. 7 is a perspective view of a semi product with a protrusion of oxide obtained after welding the metal shank and the metal bit according to the present invention.
FIG. 8 is a perspective view of a product obtained after post treatment of the semi product.

### DETAILED DESCRIPTION OF THE INVENTION

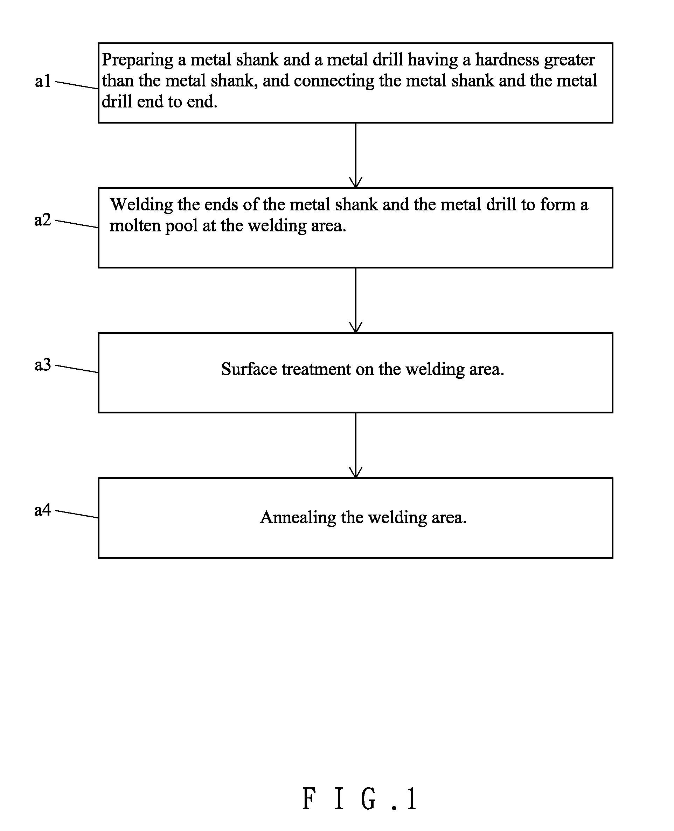

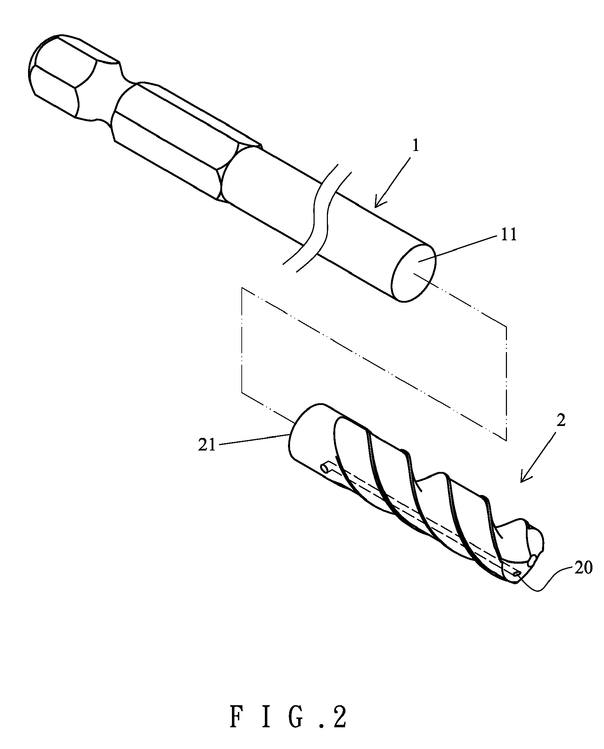

With reference to FIGS. 1 and 2, a method for producing a drill bit according to the present invention includes:
(a1) preparing a metal shank 1 and a metal drill 2, with the metal shank 1 having a hardness greater than a hardness of the metal drill 2, with each of the metal shank 1 and a metal drill 2 including an end having an end face 11, 21, with the metal shank 1 and the metal drill 2 connected end to end, and with the end face 11 of the metal shank 1 coaxially abutting the end face 21 of the metal drill 2;
(a2) welding the ends of the metal shank 1 and the metal drill 2 connected end to end, forming a molten pool at the welding area;
(a3) conducting a surface treatment on the welding area after welding; and
(a4) annealing the welding area after the surface treatment.

The metal shank 1 in step a1 can be subject to thermal processing and can be made an alloy of chromium, vanadium, molybdenum, cobalt, manganese, carbon, tungsten, titanium, niobium, nickel, and carbide, or made of high speed steel, stainless steel, or an alloy suitable for any machine too or any connecting rod. The metal shank has a hardness of about HRC30. The shape of the metal shank 1 can be cylindrical as shown, polygonal, or column-shaped suitable for direct clamping by a chuck of a machine.

The metal bit 2 can be subject to thermal processing and can made of an alloy of stainless steel, chromium, vanadium, molybdenum, cobalt, manganese, carbon, tungsten, titanium, niobium, nickel, and carbide, or made of an alloy containing tungsten carbide, or made of an alloy containing titanium, niobium, nickel, and molybdenum. The metal bit 2 has a hardness of about HRC70.

The metal bit 2 is in the form of a twisted column in the examples shown. The metal bit 2 can be a twist drill, a straight fluted drill, a countersunk drill, a conical drill, a step drill, or a drill with any other shape for sharp drilling.

The metal bit 2 can have a radius ranging from 0.1 mm to 50 mm and can have a length ranging from 20 mm to 50 mm. The metal bit 2 includes a smooth groove with any desired shape to provide a smooth fluid effect. Specifically, the metal bit 2 can have a rectilinear groove or a helical groove. Furthermore, the metal bit 2 can have a passage 20 for delivering oil and gas. In a case that the metal bit 2 includes a helical groove, the thread angle of the helical groove can range from 5° to 85°, and the length of the helical groove can range from 0.2 mm to 200 mm. The length of the passage 20 for delivering oil and gas can range from 10 mm to 200 mm.

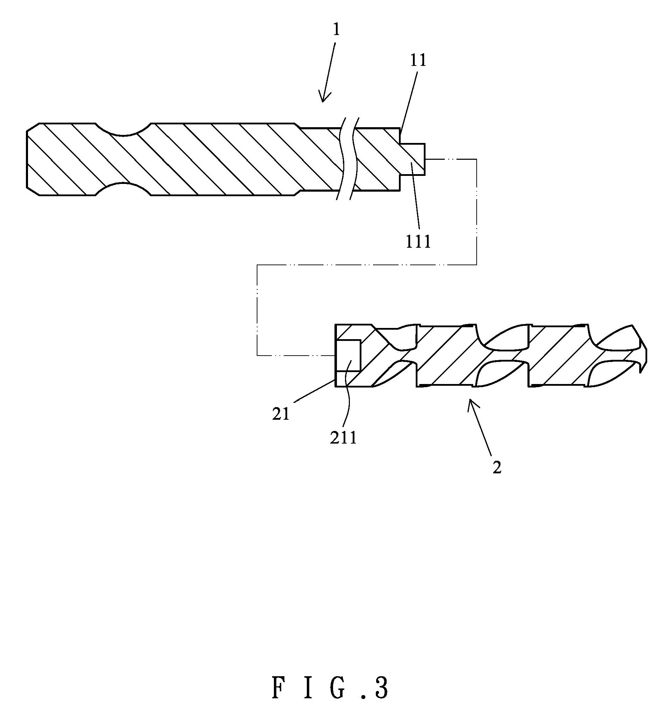

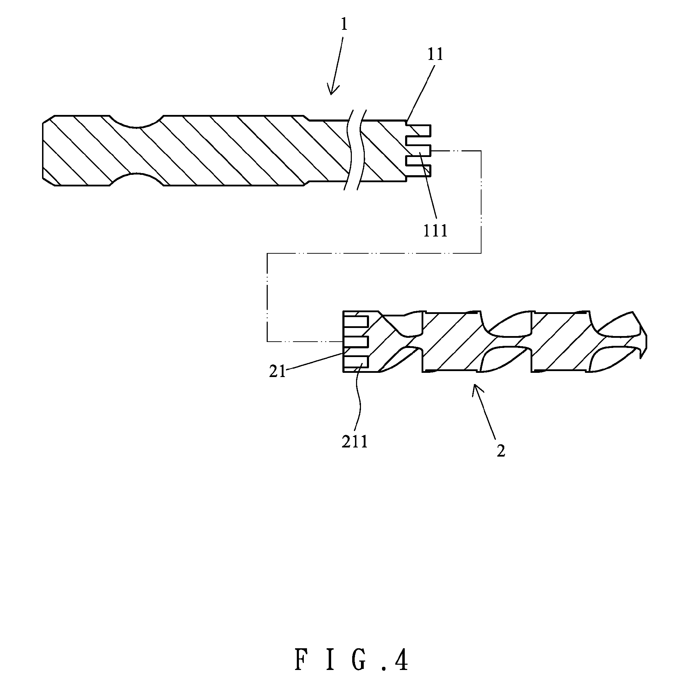

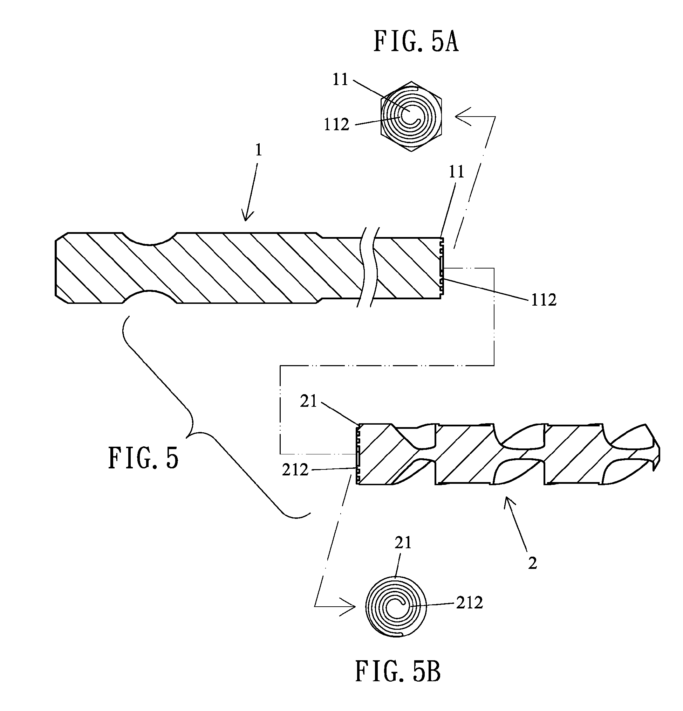

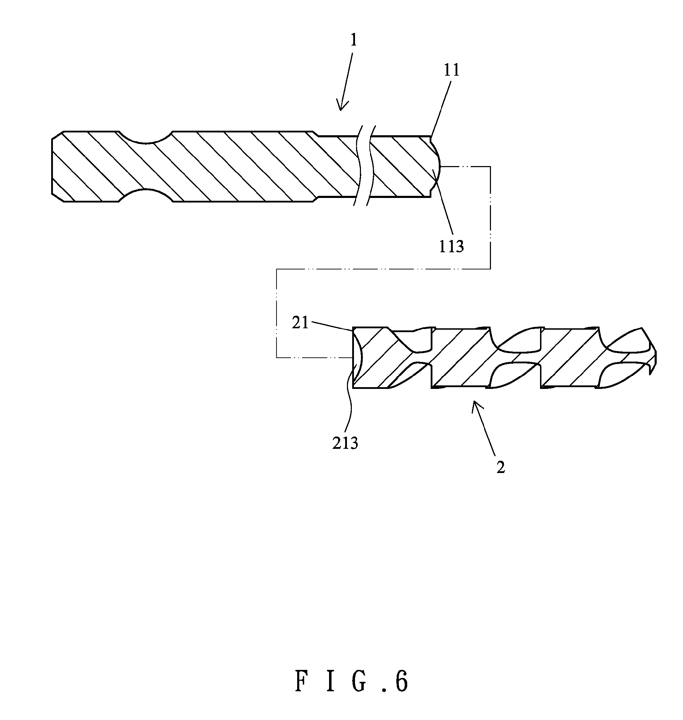

The end faces 11 and 21 of the metal shank 1 and the metal bit 2 abutting each other can have different shapes. In a first example shown in FIG. 2, the end faces 11 and 21 are flat. In a second example shown in FIG. 3, the end face 11 of the metal shank 1 includes a projection 111, the end face 21 of the metal bit 2 includes a recess 211, and the projection 111 is received in the recess 211. In a third example shown in FIG. 4, the end face 11 of the metal shank 1 includes three projections 111, the end face 21 of the metal bit 2 includes three recesses 211, and the projections 111 is received in the recesses 211. In a fourth example shown in FIG. 5, the end face 11 of the metal shank 1 includes a clockwise helical pattern 112, and the end face 21 of the metal bit 2 includes a counterclockwise helical pattern 212. The clockwise helical pattern 112 is complementary to and engages with the counterclockwise helical pattern 212. In a fifth example shown in FIG. 6, the end face 11 of the metal shank 1 includes a convex portion 113, the end face 21 of the metal bit 2 includes a concave portion 213, and the convex portion 113 is received in the concave portion 213. A better coaxial precision can be obtained when the metal shank 1 and the metal bit 2 of the examples shown in FIGS. 2-5, 5A and 5B are used.

The welding in step a2 can be coaxial welding around a peripheral contact area between the end faces 11 and 21 of the metal bit 1 and the metal shank 2. Specifically, the coaxial welding can include special arc welding (flash welding) and laser welding and can be operated at a power in range of 5-30 kw to form a molten pool having a depth of 0.1-10 mm, achieving binding of the metal shank 1 and the metal bit 2. Alternatively, the welding in step a2 can include friction welding and resistance welding and can be operated at a power in a range of 5-50 kw to form a molten pool having a depth of 10-50 mm, achieving binding of the metal shank 1 and the metal bit 2.

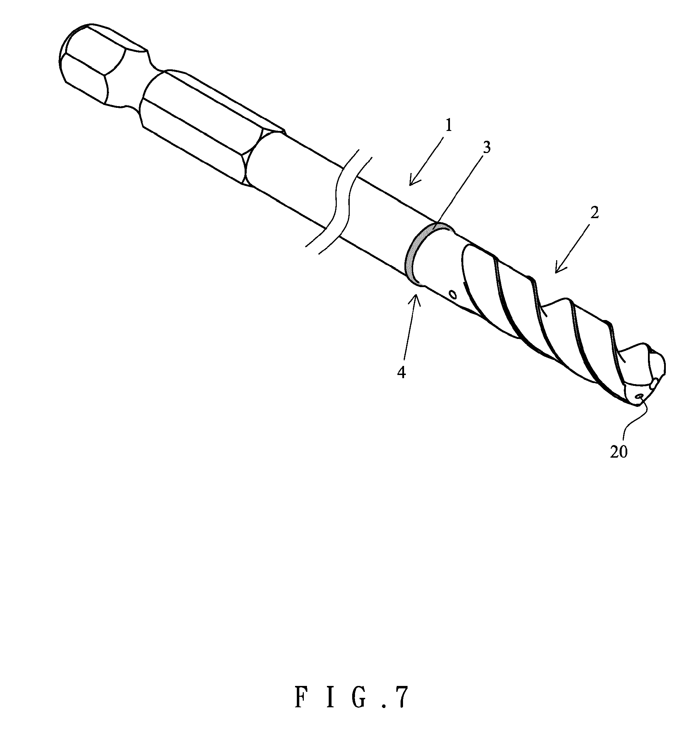

With reference to FIG. 7, a protrusion of oxide 3 is formed on the peripheral contact area between the end faces 11 and 21 of the metal bit 1 and the metal shank 2 after welding. The surface treatment in step a3 includes removing the protrusion of oxide 3 by mechanical milling or surface polishing gunding.

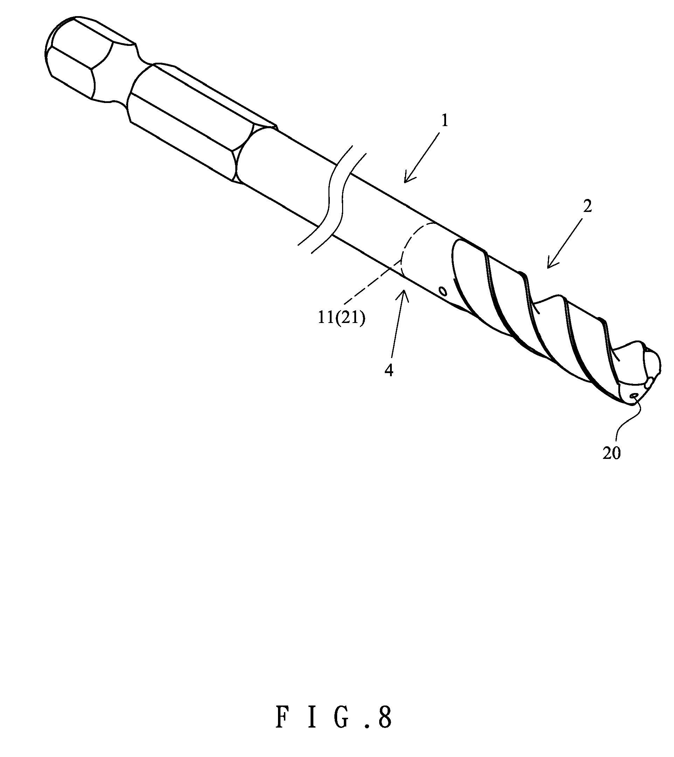

With reference to FIG. 8, the annealing in step a4 includes heating the welding area at a temperature of 400-800°C for 1-20 seconds.

The annealing procedure can release the inner stress resulting from heating the metals to the melting point during the welding procedure and then cooling and shrinking the metals, avoiding defects in the metals. In an example, the annealing includes heating a portion of the welding area by supersonic waves. The product according to the present invention after annealing has a hardness of HRC30-HRC70 from the metal shank 1 to the metal bit 2.

The method according to the present invention combines a high-hardness metal bit 2 with a low-hardness metal shank 1 to reduce the costs to increase the drilling efficiency and to prolong the service life of the high-hardness metal bit 2. After welding, annealing is conducted on the welding area to eliminate the shrinking inner stress resulting from direct cooling after high-heat welding. Furthermore, breakage at the welding portion resulting from improper shrinking stress during drilling operation can be avoided to assure use safety.

The product according to the present invention includes a first portion in the form of a high-performance metal bit 2 and a second portion in the form of a metal shank 1 connected to the end face 21 of the metal bit 2. A ratio of a length of the first portion to a length of the second portion ranges from 1:5 to 1:30. A ratio of an outer diameter of the first portion to an outer diameter of the second portion ranges from 1:1 to 1:10. These ratios can be adjusted according to different drilling purposes to provide a high-performance coaxial drilling tool.

In view of the foregoing, the method according to the present invention can save the costs for producing a drill bit. Furthermore, the strength of the drill bit can be increased after the annealing step a4.

Although specific embodiments have been illustrated and described, numerous modifications and variations are still possible without departing from the scope of the invention. The scope of the invention is limited by the accompanying claims.

## Claims

1. A method for producing a drill bit, comprising:
(a1) preparing a metal shank and a metal drill, with the metal shank having a hardness greater than a hardness of the metal drill, with each of the metal shank and a metal drill including an end having an end face, with the metal shank and the metal drill connected end to end, and with the end face of the metal shank coaxially abutting the end face of the metal drill;
(a2) welding the ends of the metal shank and the metal drill connected end to end, forming a molten pool at the welding area;
(a3) conducting a surface treatment on the welding area after welding; and
(a4) annealing the welding area after the surface treatment.

2. The method for producing a drill bit as claimed in claim 1, with the welding in step (a2) including coaxial welding around a peripheral contact area between the end faces of the metal bit and the metal shank, with the coaxial welding including flash welding and laser welding, and with the axial welding operated at a power in range of 5-30 kw to form the molten pool having a depth of 0.1-10 mm, achieving binding of the metal shank and the metal bit.

3. The method for producing a drill bit as claimed in claim 1, with the welding in step (a2) including friction welding and resistance welding, and with the welding operated at a power in a range of 5-50 kw to form the molten pool having a depth of 10-50 mm, achieving binding of the metal shank and the metal bit.

4. The method for producing a drill bit as claimed in claim 1, wherein a protrusion of oxide is formed on a peripheral contact area between the end faces of the metal bit and the metal shank after the welding in step (a2), and wherein conducting the surface treatment in step (a3) includes removing the protrusion of oxide by mechanical milling or surface polishing grinding.

5. The method for producing a drill bit as claimed in claim 1, wherein the annealing in step (a4) includes heating the welding area at a temperature of 400-800°C for 1-20 seconds.

6. The method for producing a drill bit as claimed in claim 5, wherein the annealing includes heating a portion of the welding area by supersonic waves.

7. The method for producing a drill bit as claimed in claim 1, with the metal shank in step (a1) made of high speed steel or an alloy of chromium, vanadium, molybdenum, cobalt, manganese, carbon, tungsten, titanium, niobium, nickel, and carbide, with the metal bit made of an alloy of stainless steel, chromium, vanadium, molybdenum, cobalt, manganese, carbon, tungsten, titanium, niobium, nickel, and carbide, or made of an alloy containing tungsten carbide, or made of an alloy containing titanium, niobium, nickel, and molybdenum, with the metal shank having a hardness of about HRC30, and with the metal bit having a hardness of about HRC70.

8. The method for producing a drill bit as claimed in claim 1, wherein the end face of the metal shank includes a projection, the end face of the metal bit includes a recess, and the projection is received in the recess.

9. The method for producing a drill bit as claimed in claim 1, wherein the end face of the metal shank includes a clockwise helical pattern, the end face of the metal bit includes a counterclockwise helical pattern, and the clockwise helical pattern is complementary to and engages with the counterclockwise helical pattern.

10. The method for producing a drill bit as claimed in claim 1, wherein the end face of the metal shank includes a convex portion, the end face of the metal bit includes a concave portion, and the convex portion is received in the concave portion.
